(19) Europäisches Patentamt
European Patent Office
Office européen des brevets

(11) EP 2 251 992 A1

(12) EUROPEAN PATENT APPLICATION
published in accordance with Art. 153(4) EPC

(43) Date of publication:
17.11.2010 Bulletin 2010/46

(51) Int Cl.:
H04B 7/26 (2006.01)

(21) Application number: 08721182.7

(22) Date of filing: 03.03.2008

(86) International application number:
PCT/JP2008/053762

(87) International publication number:
WO 2009/110053 (11.09.2009 Gazette 2009/37)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Fujitsu Limited
Kawasaki-shi, Kanagawa 211-8588 (JP)

(72) Inventor: YOKOYAMA, Hitoshi
Kawasaki-shi
Kanagawa 211-8588 (JP)

(74) Representative: Wilding, Frances Ward
Haseltine Lake LLP
Lincoln House, 5th Floor
300 High Holborn
London WC1V 7JH (GB)

(54) **METHOD FOR TRANSMITTING BROADCAST SERVICE SIGNAL, AND TRANSMITTER**

(57) When a transmission device transmits a broadcast service signal using a radio signal, the transmission device determines whether there is a moving body that is moving at high speed toward or away from the transmission device, and calculates the amount of Doppler shift of a radio frequency due to high speed movement based on the movement speed of the moving body when there is such a high-speed moving body. Moreover, the transmission device shifts the frequency of the radio signal for transmitting the broadcast service signal by the Doppler shift amount in the opposite direction of Doppler shift direction. By doing so, it is possible for a moving terminal to receive the broadcast service signal from the original radio frequency regardless of Doppler shifting.

FIG. 1

## Description

TECHNICAL FIELD

The present invention relates to a broadcast service signal transmission method and transmission device, and more particularly to a broadcast signal transmission method and transmission device that transmits a broadcast service signal using radio transmission.

BACKGROUND ART

In mobile communication, when a moving body is moving at high speed, a phenomenon occurs in that the spectrum shifts due to Doppler effect. Particularly, when in the mountains or inside a tunnel there are hardly any reflected waves, so only the radio signal propagates toward the moving body making it easy for Ricean distribution to occur. Conventionally, in conditions where Doppler shift due to Ricean distribution occurred, AFC (Automatic Frequency Control) or high-performance channel estimation were employed as methods for correcting Doppler distortion.

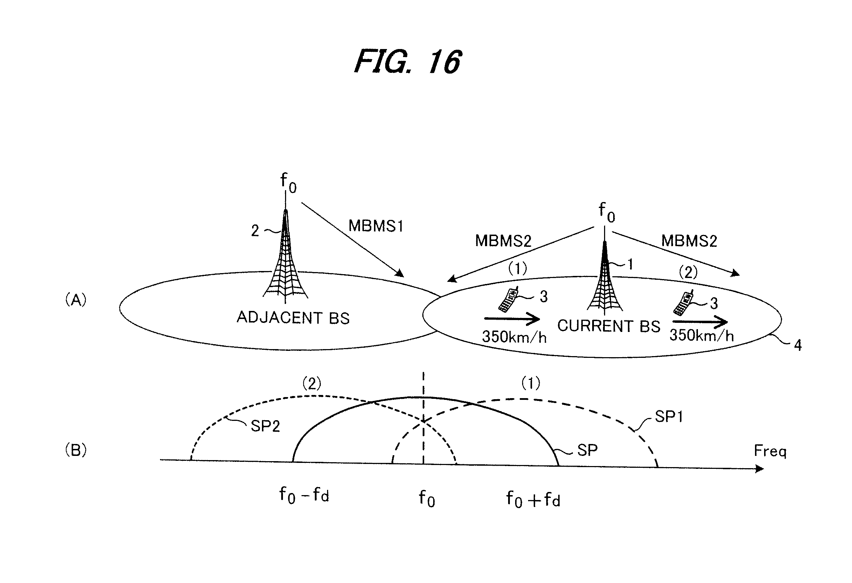

FIG. 16 is a diagram for explaining fluctuation in reception frequency due to Doppler shift. As illustrated in (A) of FIG. 16, base stations 1, 2 perform a mobile telephone broadcast service MBMS (Multimedia Broadcast Multicast Service) toward mobile terminals using a radio signal having frequency $f_0$. Currently, the mobile terminal 3 on which attention is being placed is located in area 4 where the broadcast service MBMS from base station 1 can be received, and for example is moving at a high speed of 350 km/h. When the mobile terminal 3 is moving at high speed toward the base station 1 (area (1)), the frequency from the base station 1 at the mobile terminal shifts from $f_0$ to $f_0 + f_d$ due to the Doppler effect. Moreover, when the mobile terminal 3 moves at high speed away from the base station 1 (area (2)), the frequency from the base station 1 at the mobile terminal shifts from $f_0$ to $f_0 - f_d$ due to the Doppler effect. As illustrated in (B) of FIG. 16, due to this Doppler effect, in area (1), the frequency spectrum SP1 shifts from the original spectrum SP toward the high-frequency side, and in area (2) the frequency spectrum SP2 shifts from the original spectrum SP toward the low-frequency side. Therefore, the reception power of frequency $f_0$ at the mobile terminal decreases, and Doppler distortion occurs making good reception impossible.

However, the conventional methods, AFC (Automatic Frequency Control) or high-performance channel estimation, for correcting this Doppler distortion had the following problems.

In recent years, the communication method has been changed from circuit switching to packet switching in order to improve the frequency usage efficiency, and by so doing, a radio connection become not to be always connected. As a prerequisite for being able to apply the conventional AFC, it is necessary to monitor channel states on the radio regularly to estimate their changed frequency, and by changing the communication method, it has become very difficult to compensate for Doppler distortion with AFC technology.

On the other hand, in channel estimation it is possible to compensate for Doppler distortion, however, as the radio frequency increases, the amount of Doppler shift due to higher speed of the moving body increases (for example, when the radio frequency is in the 2 GHz band and the speed of movement is 350 km/h, the Doppler shift amount is approximately 1500 Hz). In order to handle this frequency fluctuation, it is necessary to insert a reference pilot at high density on the time axis, however, this is a method of coping with the problem that contradicts the object of improving the frequency usage efficiency.

As a method of compensating for Doppler distortion is conventional art (refer to patent literature 1) that uses a GPS satellite. In this conventional art, a mobile station measures its own speed of movement and position (longitude and latitude) using a GPS satellite, determines the direction of the base station from a position measurement made in advance, calculates the Doppler shift amount $\Delta F$, makes fine adjustments of the local frequency of the transmitter according to the calculation results, and from this corrects the Doppler shift amount $\Delta F$ of transmission waves to the base station.

However, in the aforementioned conventional art, in order to compensate for the Doppler effect, only one wave of frequency on the increasing side from the original transmission frequency, or frequency on the decreasing side is transmitted. Therefore, this conventional art has a problem in that controlling whether to transmit a radio signal having frequency on the increasing side or frequency on the decreasing side is complicated.

Moreover, this conventional art is transmission control that takes into consideration Doppler shifting of transmission from a mobile station to a base station, and is not transmission control for the base station that takes into consideration the speed of movement of the moving body. In other words, the conventional art is not intended to make it possible for a moving body to properly receive a signal from a base station when Doppler shifting occurs. Furthermore, the aforementioned conventional art has a problem in that a GPS receiver must be provided in the moving body, which increases the cost of the moving body.

Taking the aforementioned problems into consideration, one object of the present invention is to make it possible for a mobile terminal in a high-speed moving body in which a plurality of users are riding to properly receive data from a base station, and make it possible for the base station to transmit data with good efficiency. Another object of the present invention is to make it possible for a mobile terminal to properly receive a signal from a base station even when Doppler shifting occurs. Moreover, another object of the present invention is to make it unnecessary to perform control for determining whether to transmit a radio signal having frequency on the increasing side or frequency on the decreasing side from the original transmission frequency in order to compensate for the Doppler effect.

Furthermore, another object of the present invention is to make it possible for a mobile terminal to properly receive a signal from a base station when Doppler shifting occurs even though there is no GPS receiver in the mobile terminal.

Patent document 1: JP2003-309517 A

DISCLOSURE OF THE INVENTION

• Broadcast Service Signal Transmission Method

A first form of the invention is a broadcast service signal transmission method for a transmission device that transmits a broadcast service signal using a radio signal.

A first broadcast service signal transmission method comprises steps of: determining whether there is a moving body that is moving at high speed toward or away from the transmission device; calculating an amount of Doppler shift of a radio frequency due to high speed movement based on the movement speed of the moving body when there is such a moving body; and shifting a frequency of the radio signal for transmitting the broadcast service signal by the Doppler shift amount in the opposite direction of Doppler shift direction.

A second broadcast service signal transmission method comprises steps of: determining whether there is a moving body that is moving at high speed toward or away from the transmission device; calculating an amount of Doppler shift of a radio frequency due to high speed movement based on the movement speed of the moving body when there is such a moving body; shifting a frequency of the radio signal for transmitting the broadcast service signal by the Doppler shift amount in both the plus direction and minus direction; and transmitting the broadcast service signal using each of the shifted radio signals.

The first and second broadcast service signal transmission methods further comprise a step of receiving information of whether there is a moving body that is moving at a speed higher than a reference speed toward the transmission device or away from the transmission device, and the movement speed of the moving body from an external moving body position management server that manages the position and speed of the moving body that exists in an area in which communication is possible with the transmission device.

The first and second broadcast service signal transmission methods, when there are a plurality of moving bodies moving at high speed toward or away from the transmission device, calculate the amount of Doppler shift based on the movement speed of each moving body; shifts the frequency of the radio signal by each Doppler shift amount; and transmits the broadcast service signal by each shifted radio signal. In this case, the first and second broadcast service signal transmission methods divide the movement speed into a plurality of speed ranges, and set a representative speed for each speed range; shift the frequency of the radio signal by the Doppler shift amount that corresponds to the representative speed of the speed range to which the speed of the moving body belongs; and transmits the broadcast service signal using the shifted radio signal.

The second broadcast service signal transmission method described above, shifts a first frequency $f_0$ for transmitting the broadcast service signal the Doppler shift amount in the minus direction, shifts a second frequency $f_1$ by the Doppler shift amount in the plus direction, and transmits the broadcast service signal using the each of the shifted radio signals.

• Transmission Device

A second form of the invention is a transmission device that transmits a broadcast service signal using a radio signal.

A first transmission device comprises: a judgment unit that determines whether there is a moving body that is moving at high speed toward or away from the transmission device; a Doppler shift amount calculation unit that calculates an amount of Doppler shift of a radio frequency due to high speed movement based on the movement speed of the moving body when there is such a moving body; a radio frequency shifting unit that shifts a frequency of the radio signal for transmitting the broadcast service signal by the Doppler shift amount in the opposite direction of Doppler shift direction; and a transmission unit that transmits the broadcast service signal by the shifted radio signal.

A second transmission device comprises: a judgment unit that determines whether there is a moving body that is moving at high speed toward or away from the transmission device; a Doppler shift amount calculation unit that calculates an amount of Doppler shift of a radio frequency due to high speed movement based on the movement speed of the moving body when there is such a moving body; a frequency shifting unit that shifts a frequency of the radio signal for transmitting the broadcast service signal by the Doppler shift amount in both the plus direction or minus direction; and a transmission unit that transmits the broadcast service signal by each shifted radio signal.

The first and second transmission devices further comprise a receiving unit that receives information of whether there is a moving body that is moving at a speed higher than a reference speed toward the transmission device or away from the transmission device, and the movement speed of the moving body from an external moving body position management server that manages the position and speed of the moving body that exists in an area in which communication is possible with the transmission device.

In the first and second transmission devices, when there are a plurality of moving bodies moving at high speeds toward or away from the transmission device; the Doppler shift amount calculation unit calculates the amount of Doppler shift based on the movement speed of each of the moving bodies; the radio frequency shifting unit shifts the frequency of the radio signal by each Doppler shift amount; and the transmission unit transmits the broadcast service signal using each of the shifted radio signals. In this case, by dividing the movement speed into a plurality of speed ranges and setting a representative speed for each speed range, the radio frequency shifting unit shifts the frequency of the radio signal by a Doppler shift amount that corresponds with the representative speed of the speed range to which the speed of the moving body belongs, and the transmission unit transmits the broadcast service signal using the shifted radio signal.

In the second transmission device the radio frequency shifting unit shifts the frequency $f_0$ of a first radio signal for transmitting the broadcast service signal by the Doppler shift amount in the minus direction, and shifts the frequency $f_1$ of a second radio signal by the Doppler shift amount in the plus direction; and the transmission unit transmits the broadcast service signal using each of the shifted radio signals.

BREIF DESCRIPTION OF THE DRAWINGS

FIG. 1 is a diagram for explaining a first embodiment.
FIG. 2 is a diagram for explaining a second embodiment.
FIG. 3 is a diagram for explaining a third embodiment.
FIG. 4 is a diagram for explaining a fourth embodiment.
FIG. 5 is a diagram for explaining a fifth embodiment.
FIG. 6 is a diagram of the construction of a transmitting device in the base station of the first embodiment.
FIG. 7 is a diagram of the construction of the transmitting device of the first embodiment to which a constant broadcast service MBMS can be provided to a moving terminal that is moving at a speed that is equal to or less than a standard speed.
FIG. 8 is a flowchart of the entire process of FIG. 7.
FIG. 9 is diagram of the construction of a transmitting device of the base station of the second embodiment.
FIG. 10 is a variation of the second embodiment.
FIG. 11 is a diagram of the construction of a transmitting device of the base station of the third embodiment.
FIG. 12 is a diagram of the construction of a receiving device of a moving terminal that corresponds to the first to third embodiments.
FIG. 13 is a diagram for explaining the construction of a transmitting device of the fourth embodiment.
FIG. 14 is a diagram of the construction of the receiving device of a moving terminal that receives and outputs broadcast data that is transmitted from the transmitting device in FIG. 13.
FIG. 15 is a flowchart of the processing by a placement information server.
FIG. 16 is a diagram for explaining the receiving frequency fluctuation due to Doppler shift.

DESCRIPTION OF THE PREFERRED EMBODIMENTS

(A) Summary of Each Embodiment

(a) Summary of Embodiment 1

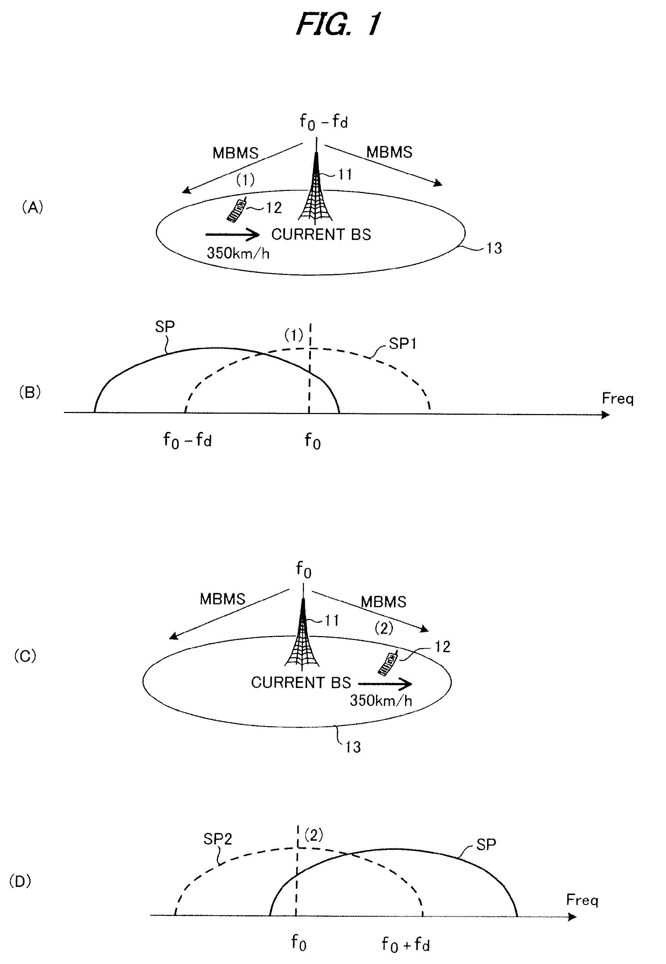

FIG. 1 is a diagram for explaining a first embodiment. A broadcast service MBMS from a base station 11 toward a mobile telephone is being performed toward a moving terminal using a radio signal having a specified frequency. Currently, the moving terminal 12 in question is located inside an area (cell) 13 where the broadcast service MBMS from the base station 11 can be received, and is moving at high speed of 350 km/h.
As illustrated in (A) of FIG. 1, when the moving terminal 12 is moving toward the base station 11 at high speed (area (1)), the base station broadcasts the broadcast service MBMS using a radio signal having a frequency $f_0 - f_d$ that is less than the original radio frequency by just the amount of Doppler shift (= $f_d$). By doing so, the frequency spectrum SP at the base station 11 becomes as illustrated by the solid line in (B) of FIG. 1, and the frequency spectrum SP1 at the moving terminal 12 becomes as the dashed line, so at the original receiving frequency $f_0$, the power becomes a maximum and good reception is possible.
Moreover, as illustrated in (C) of FIG. 1, when the moving terminal 12 is moving away from the base station 11 at high speed (area (2)), the base station 11 broadcasts the broadcast service MBMS using a radio signal having a frequency $f_0 + f_d$ that is higher than the original frequency $f_0$ by just the amount of Doppler shift (= $f_d$). By doing so, the frequency spectrum SP at the base station 11 becomes as illustrated by the solid line in (D) of FIG. 1, and the frequency spectrum SP2 at the moving terminal 12 becomes as the dashed line, so at the original frequency $f_0$, where the power becomes a maximum, good reception becomes possible.
In short, the base station is aware of the moving body (moving terminal) 12 that is moving at high speed and knows whether the moving body 12 is moving closer to the base station 11 or moving in a direction away from the base station 11, as well as knows the relative speed of the moving body with respect to the base station 11. In addition, based on this direction of movement and the relative speed, the base station 11 calculates the amount of Doppler shift and transmits data using a radio signal having a transmission frequency $f_0 - f_d$ or $f_0 + f_d$ in which the original transmission frequency of the base station is increased or decreased by the amount of Doppler shift. Consequently, when the signal is received by the moving terminal, it is possible to receive the signal from the original desired radio frequency $f_0$ even when Doppler shifting occurs.

With this first embodiment, when a moving body that is moving at high speed is located within a cell, it is possible to provide a stable broadcast service to a moving terminal in that moving body. The present invention, is easily applied when providing a broadcast service, however, in addition to this, the invention can also be applied to a multicast and unicast.

(b) Summary of Embodiment 2

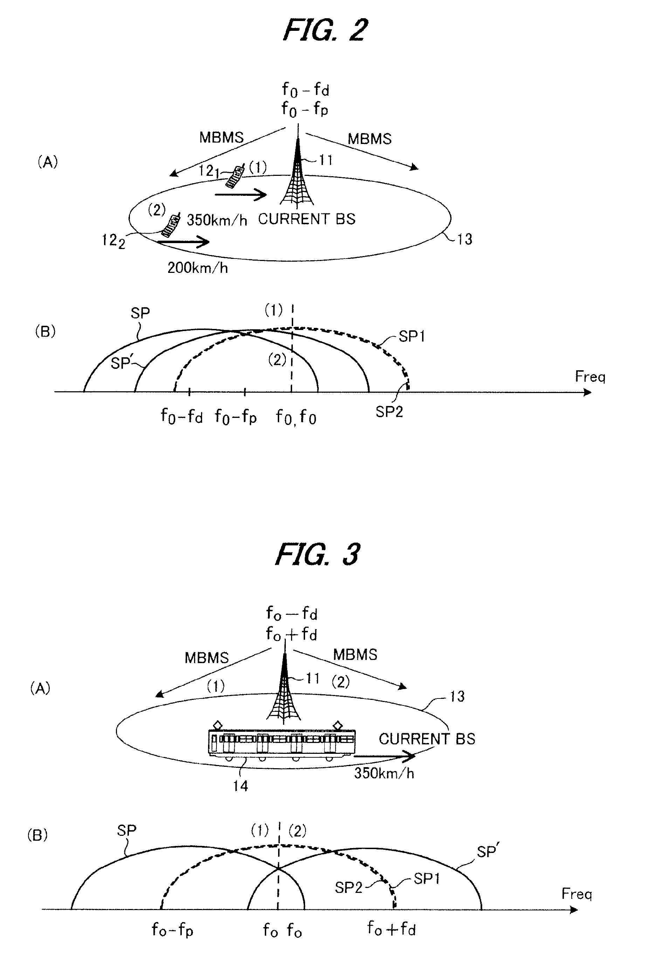

FIG. 2 is a diagram for explaining a second embodiment, where the same reference numbers are used for parts that are the same as in FIG. 1. In FIG. 1 there was one moving body in the cell 13, however, in FIG. 2, there is a plurality of moving bodies in the cell. For example, moving body $12_1$ is moving toward the base station 11 at a high speed of 350 km/h, and moving body $12_2$ is moving toward the base station 11 at a high speed of 200 km/h. The base station 11 knows that the moving body $12_1$ is moving toward the base station and that the relative speed is 350 km/h, while at the same time knows that the other moving body $12_2$ is moving toward the base station and that the relative speed is 200 km/h. Based on the direction of movement and the relative speed, the base station 11 calculates the amount of Doppler shift, and acquires the amount of Doppler shift $f_d$ for the moving body $12_1$, and the amount of Doppler shift $f_p$ for the moving body $12_2$. The base station 11 broadcasts a broadcast service MBMS using a radio signal having a first frequency $f_0 - f_d$ that is less than the original radio frequency $f_0$ by the amount of the first Doppler shift ($= f_d$), and broadcasts a broadcast service MBMS having a second frequency $f_0 - f_p$ that is less than the original radio frequency $f_0$ by the amount of the second Doppler shift ($= f_p$). By doing so, the frequency spectra SP, SP' at the base station 11 becomes as illustrated by the solid line in (B) of FIG. 2, and the frequency spectrum SP1 at the moving body $12_1$ become as illustrated by the dashed line. In addition the frequency spectrum $SP_2$ of the moving body $12_2$ becomes as illustrated by the dashed line, so at the moving bodies $12_1$, $12_2$, the power becomes a maximum at the original receiving frequency $f_0$ and good reception is possible.

From this, an MBMS broadcast is performed using a first radio signal so that the Doppler shift of the moving body $12_1$ is compensated for, and an MBMS broadcast is performed using a second radio signal so that the Doppler shift of the moving body $12_2$ is compensated for. By doing this, the moving terminal in each of the moving bodies can receive an MBMS radio signal from the base station at the original desired radio frequency. In FIG. 2, the case is explained in which two moving bodies are moving at high speed, however the same control is possible even for more than two. Moreover, in FIG. 2, the case was explained in which the moving bodies are moving toward the base station at high speed, however, the same control is performed for the case in which the moving bodies are moving away from the base station, or for the case in which the moving bodies are mixed, where some are moving toward the base station and some are moving away.

(c) Summary of Embodiment 3

FIG. 3 is a diagram for explaining a third embodiment, where the same reference numbers are used for parts that are the same as those in FIG. 1. In FIG. 1, the base station determines whether the moving body 12 is moving toward or moving away from the base station 11 at high speed. When the moving body is moving toward the base station 11 at high speed, the base station broadcasts a broadcast service MBMS using a radio signal having a frequency $f_0 - f_d$, and when the moving body 12 is moving away at high speed, the base station 11 broadcasts a broadcast service MBMS using a radio signal having a frequency $f_0 + f_d$. When the size the moving body is small such as an automobile, no problems occur in the method of FIG. 1.

However, when the moving body has a length that extends to as much as 100 m as in the case of a train, the train car that is positioned at the front of the moving body, which is a train 14 as illustrated in FIG. 3, is moving away from the base station, and a train car that is positioned at the end of the train 14, is moving toward the base station, and at a certain position in a train car, the amount of Doppler effect suddenly changes from + to -. In that case, in the method of FIG. 1, only the moving terminals of the users that are riding in the cars in either the front or the rear are able to receiving the MBMS radio signal with good reception at the original receiving frequency, and the moving terminals of the users that are riding in the other cars are not able to receive the MBMS radio signal with good reception at the original receiving frequency due to Doppler shifting.

Therefore, the base station 11 of this third embodiment supposes that in a moving body 14 that is moving at high speed, there is a user (moving terminal) that is moving toward the base station and at the same time there is a moving terminal that is moving away from the base station. and simultaneously transmits MBMS radio signals at transmission frequencies $f_0 - f_d$ and $f_0 + f_d$ that have been increased or decreased from the original transmission frequency $f_0$ by the amount of Doppler shift $f_d$. By doing so, even when the moving body 14 is long, the moving terminals can receive the MBMS radio signal with good reception from the original desired radio frequency $f_0$ regardless of which car the user is riding in.

In other words, the base station 11 knows that the moving body 14 is moving toward the base station and that the relative speed is 350 km/h. Next, based on this relative speed, the base station 11 calculates the amount of Doppler shift $f_d$ from the original radio frequency $f_0$, and in preparation for the moving body passing directly below the base station, transmits a MBMS radio signal using two radio signals having the frequencies $f_0 - f_d$ and $f_0 + f_d$. By doing this, the frequency spectra SP, SP' at the base station 11 become as illustrated by the solid line in (B) of FIG. 3, the frequency spectrum SP1 of the train car that is moving toward the base station becomes as illustrated by the dashed line, and the frequency spectrum SP2 of the train car that is moving away from the base station becomes as illustrated by the dashed line, where the power becomes a maximum at the original receiving frequency $f_0$. As a result, the moving terminals can receive the MBMS radio signal from the original desired radio frequency $f_0$ with good reception regardless of the car the user is riding in.

(d) Summary of Embodiment 4

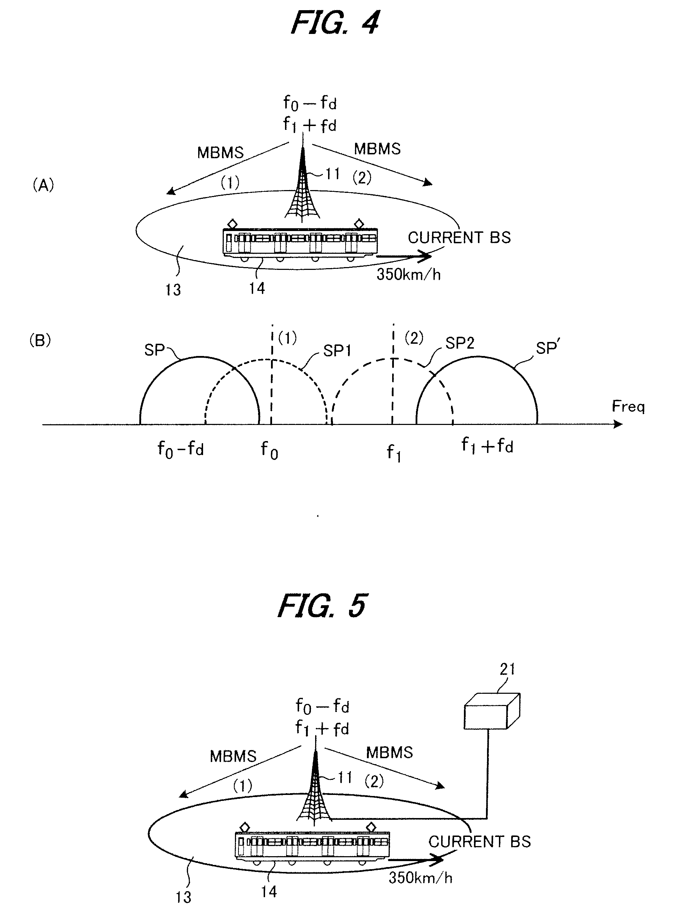

FIG. 4 is a diagram for explaining a fourth embodiment, where the same reference numbers are used for parts that are the same as those of FIG. 3. In FIG. 3, when detecting a high-speed moving body, the base station transmits a MBMS radio signal using two radio signals having frequencies $f_0 - f_d$ and $f_0 + f_d$, however, in this fourth embodiment, when the base station 11 detects a moving body (train) moving at high speed, the base station 11 transmits a MBMS radio signal using two radio signals having frequencies $f_0 - f_d$ and $f_1 + f_d$ ($f_1 > f_0$). However, the moving terminal, which is the receiving side, must comprise two synchronized receivers for the receiving frequencies $f_0$ and $f_1$.

In other words, the base station 11 knows that the moving body is moving toward the base station and that the relative speed is 350 km/h. Next, the base station calculates the amount of Doppler shift $f_d$ based on this relative speed, and in preparation for the moving body to pass directly below the base station, transmits a MBMS radio signal using two radio signals having frequencies $f_0 - f_d$ and $f_1 + f_d$. The moving terminal in the moving body 14 receives, demodulates and decodes the radio signals having frequencies $f_0$ and $f_1$, and outputs the decoded result of the signal having the lowest error rate. By doing so, the frequency spectra SP, SP' at the base station 11 become as illustrated by the solid line in (B) of FIG. 4, the frequency spectrum SP1 in the train car that is moving toward the base station becomes as illustrated by the dashed line, and the frequency spectrum SP2 in the train car that is moving away from the base station becomes as illustrated by the dashed line, where the power becomes a maximum at the original receiving frequencies $f_0$, $f_1$. By compensating for the Doppler shift by using radio signals having different frequencies, the frequency spectra SP, SP' do not interfere. As a result, the moving terminal can receive the MBMS radio signal from either of the original desired radio frequencies $f_0$ or $f_1$ with good

reception regardless of the train car the user is riding in. When the moving terminal in the moving body 14 is moving toward the base station 11, there is a frequency shift toward the high-frequency side, so the signal having a receiving frequency $f_0$ is decoded, however the transmission signal having frequency $f_1 + f_d$ moves to $f_1 + 2f_d$, so this signal cannot be decoded by the receiver. Moreover, similarly, when the moving terminal in the moving body 14 is moving away from the base station, there is a frequency shift toward the low-frequency side, so the signal having a receiving frequency $f_1$ is decoded, however the transmission signal having a frequency $f_0 - f_d$ moves to $f_0 - 2f_d$, so this signal cannot be decoded by the receiver. As a result, by receiving and decoding the two radio signals having frequencies $f_0$ and $f_1$, good characteristics can be obtained by selecting one depending on the direction of movement. Therefore, control is performed so that the receiver receives, demodulates and decodes the two radio signals that are transmitted in the same broadcast, then selects and outputs the one having the least amount of error.

(e) Summary of Embodiment 5

FIG. 5 is a diagram for explaining a fifth embodiment, where the same reference numbers are used for parts that are the same as those in FIG. 3. In FIG. 5, only when a moving body 14 that is moving at high speed is inside a cell 13, the base station 11 transmits a broadcast service MBMS radio signal using a plurality of radio signals having frequencies $f_0 - f_d$ and $f_0 + f_d$ other than the original radio frequency $f_0$, and at other times, transmits a MBMS radio signal using only the radio frequency fo. In other words, in the fifth embodiment, control is performed so that the frequency of the broadcast service is adaptively assigned. As a method for accomplishing this, the time of passing of the moving body 14 and the estimated passing speed are notified from a position information management server 21, and adaptive control is performed according to that information. For example, a server that performs diagram management of the train is used as the position information management server 21, and before the train passes, the server transfers the most recent information to the base station 11 in advance. By using construction in which the passing time and estimated passing speed of the moving body 14 are received from a position information management server 21, it is not necessary for the GPS receiver to be mounted in the moving body. With this fifth embodiment, the base station 11 is able to constantly detect a moving body 14 blind, and adjust the transmitting frequency, and thus it is possible to omit the process of detecting the high-speed moving body, and to perform the broadcast service stably and efficiently.

(B) Embodiment 1

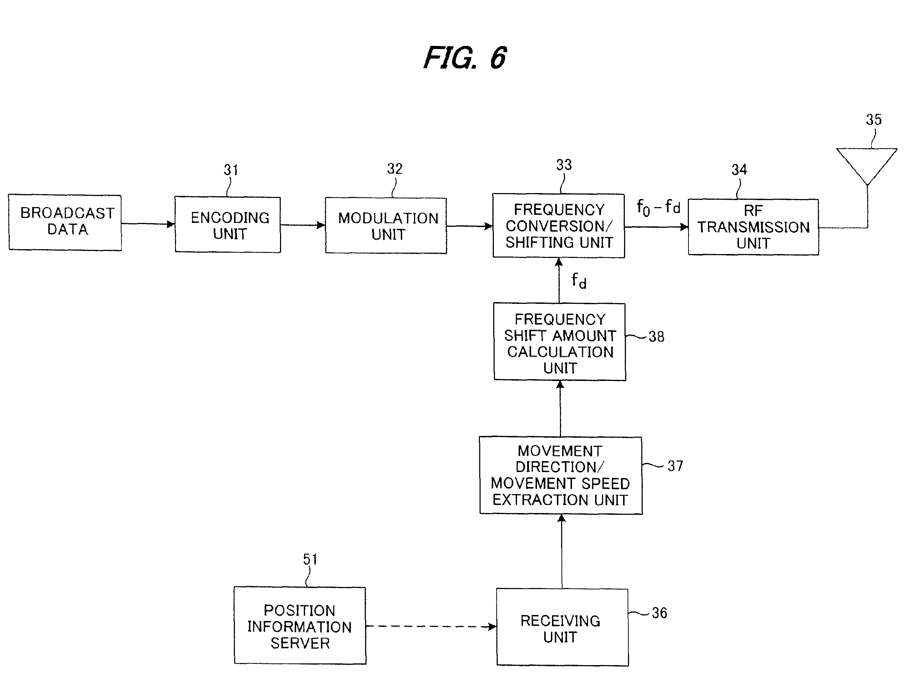

FIG. 6 is a diagram of the construction of a transmitting device in a base station of a first embodiment. An encoding unit 31 performs turbo encoding or convolutional encoding of broadcast data to be transmitted, a modulation unit 32 performs a specified modulation process on the encoded broadcast data, a frequency conversion/shifting unit 33 converts the frequency of the baseband signal resulting from modulation to an RF signal and an RF transmitting unit 34 amplifies that RF signal and transmits the signal from an antenna 35. A receiving unit 36 acquires from a position information server 51, information of whether there is a moving body in a cell that is moving at a speed higher than a reference speed (for example a train), and when there is such moving body, acquires information of the speed of movement and whether that moving body is moving toward or away from the base station. It is possible to use a traffic control server of the railway company that manages the status of train traffic as the position information server 51. In addition, the reference speed is, for example, the limit speed that can be followed by channel estimation.

A movement direction/movement speed extraction unit 37 extracts the movement speed and movement direction (moving toward/moving away) of the moving body that is moving a speed higher than a reference speed from information received from the position information server 51 and inputs the results into a frequency shift amount calculation unit 38. The frequency shift amount calculation unit 38 calculates the amount of frequency shift $f_d$ due to the Doppler effect from Equation (1), and inputs the result to a frequency conversion/shifting unit 33.

$$f_d = f_0(m/c) \qquad (1)$$

Here, m is the correction speed, and when the moving body is moving toward the base station at a relative speed v [m/s], m = v, and when the moving terminal is moving away from the base station at a relative speed v, m = -v. Moreover, $f_0$ (Hz) is the original radio frequency, and c (m/sec) is the propagation speed of a radio signal.

The frequency conversion/shifting unit 33 does not perform the frequency conversion/shifting operation when there is no moving body in the cell that is moving at a high speed higher then the reference speed (specified speed), and outputs zero for example. By doing so, the broadcast service MBMS is not provided to a moving terminal in a moving body that is moving a low speed less than the reference speed.

On the other hand, when there is moving body in the cell that is moving at a high speed that is higher than the reference speed, the frequency conversion/shifting unit 33 converts the baseband signal resulting from modulation to a radio signal having a frequency $f_0 - f_d$, and inputs that signal to the RF transmission unit 34, and the RF transmission unit transmits that RF signal. As a result, a moving terminal in a high-speed moving body is able to receive the MBMS radio signal with good reception without being affected by the Doppler shift.

In this first embodiment described above, the transmission device of a base station receives position information from a position information server 51 which notifies there is a moving body, or in other words, a moving terminal, that is moving at a speed that cannot be followed by channel estimation, and receives the movement direction of that moving body and the relative speed with respect to the base station (movement speed), after which the base station calculates the amount of Doppler shift $f_d$ based on that information. In addition, in order that the moving terminal can compensate for this Doppler shift, the transmission device shifts the frequency of the transmission signal by the amount ($-f_d$) and transmits the broadcast data using the shifted radio signal. This first embodiment is a broadcast service for a certain moving terminal, for example a moving terminal that exists in a high-speed moving body (train, etc.), and performs frequency compensation on the transmitting side for that moving terminal.

• First Variation of Embodiment 1

In the first embodiment, when there is no moving body in a cell that is moving at a high speed higher than a reference speed, the frequency conversion/shifting unit 33 does not perform frequency conversion/shifting and outputs zero. However, construction can be such that when there is no moving body in a cell that is moving at a high speed higher than a reference speed, the frequency conversion/shifting unit 33 converts the baseband signal resulting from modulation to a radio signal having frequency $f_0$, and inputs that radio signal to the RF transmission unit 34, after which the RF transmission unit 34 transmits that RF signal. By doing this, adaptive control of the fifth embodiment described above is possible. This variation can also be applied to the second to fourth embodiments.

• Second Variation of Embodiment 1

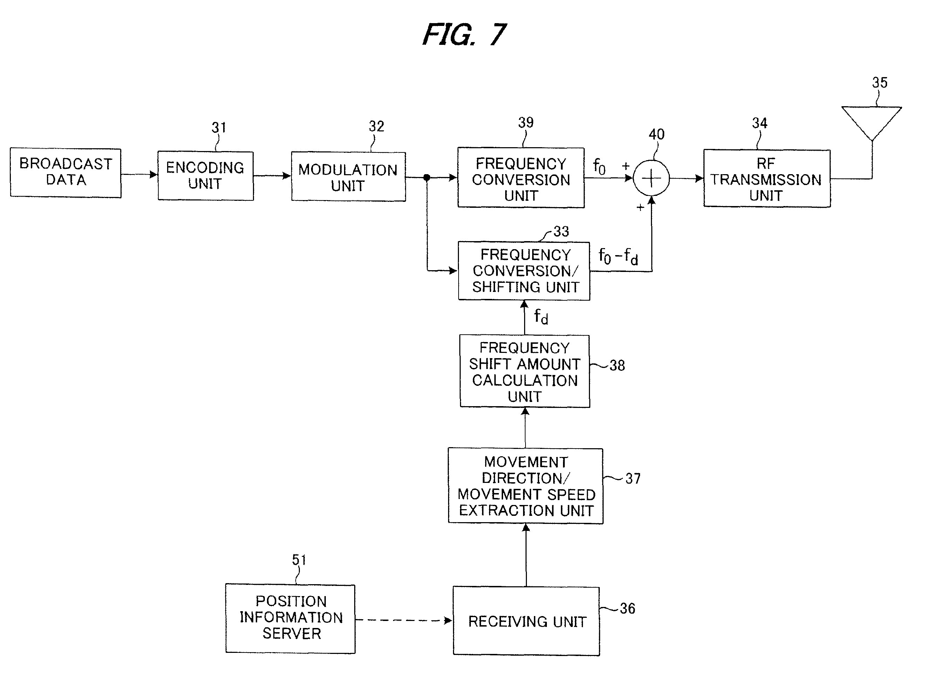

FIG. 7 is a diagram of the construction of a transmission device that makes it possible to constantly provide a broadcast service MBMS to a moving terminal that is moving at a speed equal to or less than a reference speed, where a frequency conversion unit 39 and combination unit 40 are added to the construction of FIG. 6. In the transmission device of FIG. 7, the frequency conversion unit 39 constantly converts the baseband signal resulting from modulation to a radio signal having the original frequency $f_0$ and outputs the result, and only when there is a moving body in a cell that is moving at a high speed higher than the reference speed, the frequency conversion/shifting unit 33 convert the baseband signal resulting from modulation to a radio signal having a frequency of $f_0 - f_d$ and output the result. The combination unit 40 combines the radio signal having a frequency $f_0$

that is output from the frequency conversion unit 39 with the radio signal having frequency $f_0 - f_d$ that is output from the frequency conversion/shifting unit 33 and inputs the result to the RF transmission unit 34, after which the RF transmission unit 34 transmits the combined RF signal. The construction of FIG. 7 is also possible in the second to fourth embodiments described later.

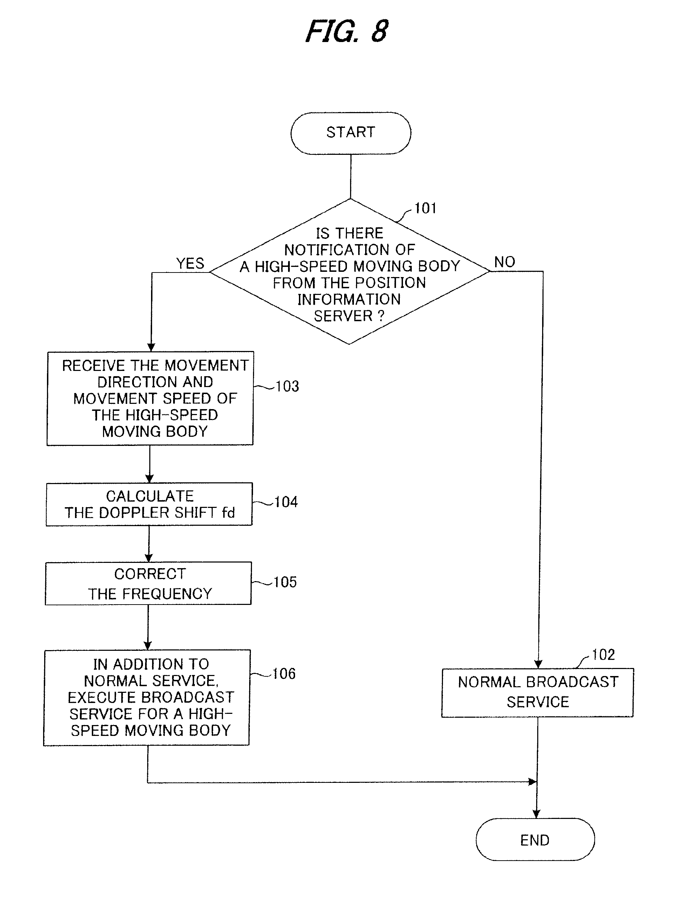

FIG. 8 is a flowchart of the overall processing of FIG. 7, where when in the information from the position information server 51, there is no moving body moving at high speed (step 101: NO), the broadcast service MBMS is provided to a low-speed moving terminal via the frequency conversion unit 39 (step 102; normal service), and when there is a high-speed moving body, in addition to the normal service of steps 103 to 105, the broadcast service MBMS is provided to a moving terminal on the high-speed moving body (step 106).

(C) Embodiment 2

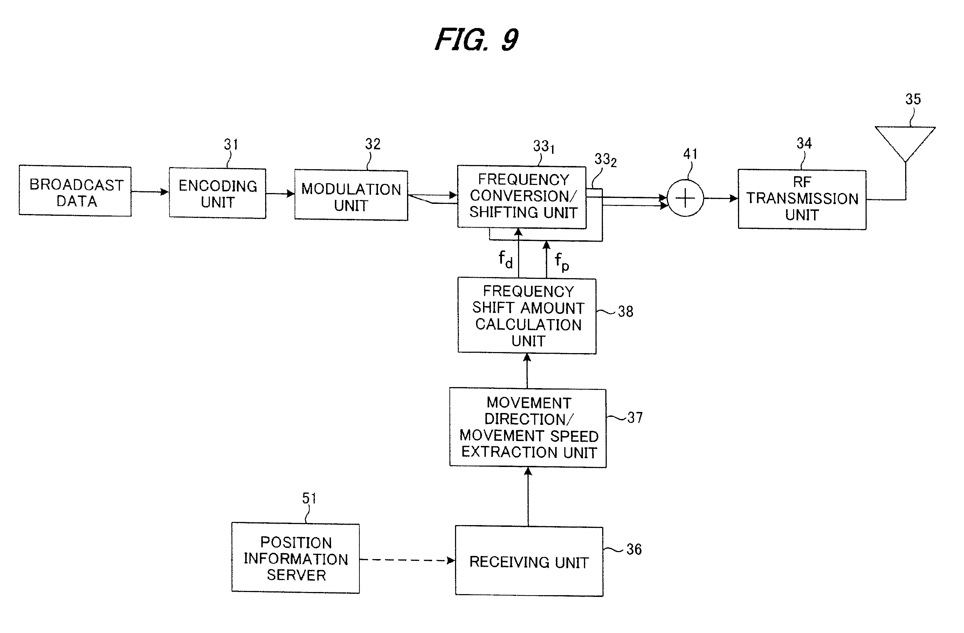

FIG. 9 is a diagram of the construction of a transmission device in a base station of a second embodiment, where the same reference numbers are used for parts that are the same as those of the first embodiment in FIG. 6. This embodiment differs in that two frequency conversion/shifting units $33_1$, $33_2$ and a combination unit 41 are provided so that a broadcast service MBMS can be provided to two high-speed moving bodies that are moving at different speeds.

The position information server 51 sends information to the transmission device of the base station indicating whether there is a moving body in a cell that is moving at a high speed higher than a reference speed (for example, a train), and when there is such a high-speed moving body, sends information to the transmission device of the base station indicating the movement speed and whether the moving body is moving toward the base station or moving away from the base station. In this case, when there are two high-speed moving bodies that are moving at a different speeds, the position information server 51 sends information to the transmission device for each moving body indicating the movement speed and movement direction (moving toward/moving away the base station). Moreover, when there are two high-speed moving bodies that are moving at the same speed, and the movement directions are different (moving toward/moving away from the base station), the position information server 51 sends information to the transmission device for each moving body indicating the movement speed and movement direction.

The movement direction/movement speed extraction unit 37 extracts the movement speed and movement direction of the two moving bodies from the information received from the position information server 51 via the receiving unit 36, and inputs the results to a frequency shift amount calculation unit 38. Using Equation (1), the frequency shift amount calculation unit 38 calculates the frequency shift amounts $f_d$, $f_p$ due to the Doppler effect for each of the moving bodies, and inputs the results to the frequency conversion/shifting units $33_1$, $33_2$, respectively.

The frequency conversion/shifting unit $33_1$ converts the baseband signal resulting from modulation to a radio signal having a frequency $f_0 - f_d$ and outputs the result, the frequency conversion/shifting unit $33_2$ converts the baseband signal resulting from modulation to a radio signal having a frequency $f_0 - f_p$ and outputs the result, the combination unit 41 combines the radio signals that were outputted from the frequency conversion/shifting units $33_1$, $33_2$ and inputs the result to the RF transmission unit 34, and the RF transmission unit 34 transmits the combined RF signal. As a result, two high-speed moving bodies that are moving at different speeds, or the moving terminals in two high-speed moving bodies that are moving in different directions at the same speed can receive a MBMS radio signal with good reception without being affected by Doppler shifting.

In the explanation above, the case was explained for construction that handles two high-speed moving bodies, however, construction is also possible that can handle n number of high-speed moving bodies by providing n number of frequency conversion/shifting units.

Moreover, by adding the frequency conversion unit 39 of FIG. 7 to this second embodiment, construction is possible in which a broadcast service MBMS can constantly be provided to moving terminals that are moving at a speed less than a reference speed.

• Variation

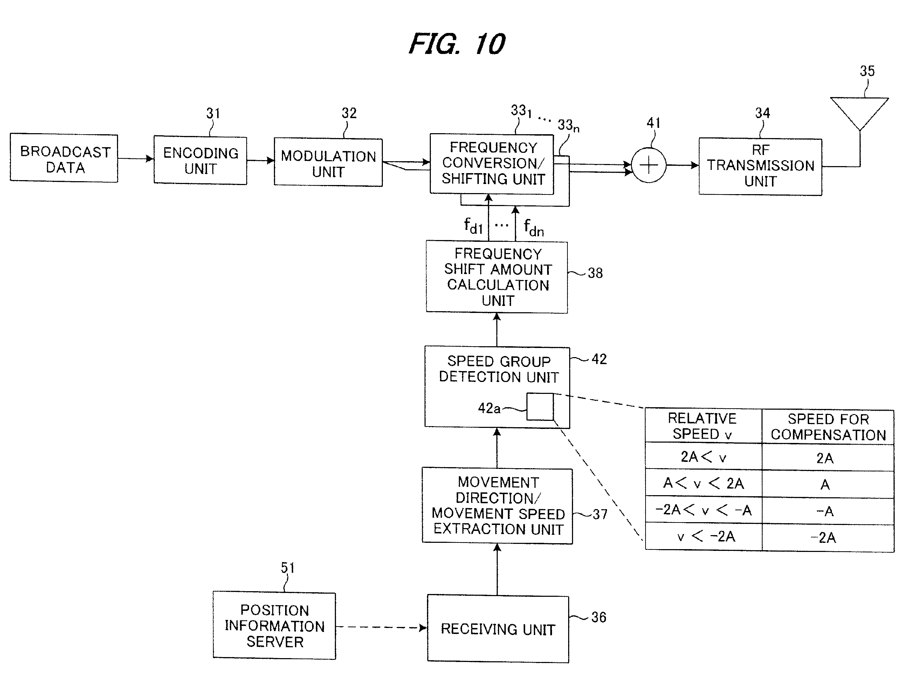

FIG. 10 is a variation of the second embodiment, where the same reference numbers are given to parts that are the same as those of the second embodiment in FIG. 9. This variation differs in that a speed group detection unit 42 is provided. In the second embodiment, when n = 4 for example, only four high-speed moving bodies can be handled, therefore, in this variation, construction is such that the movement speed is divided into a plurality of speed ranges, a representative speed is set for each speed range, and the frequency conversion/shifting units $33_1$ to $33_n$ perform shifting by the amount of Doppler shift that corresponds to the representative speed of the speed range in which the speed of a high-speed moving body belongs. In the example of FIG. 10, four speed ranges are set in a table 42a, and the representative speeds of each range are 2A, A, -A and -2A (positive when moving toward the base station, and negative when moving away). By doing so, the number of moving bodies is not limited to four, and it is possible to handle a plurality of moving bodies. It is preferred that a threshold value of A km/h be set as the limit value that can be followed by channel estimation.

When the speeds of movement of a plurality of high-speed moving bodies are input from the movement direction/movement speed extraction unit 37, the speed group detection unit 42 references the table 42a and finds the speed range to which the speed of movement of each moving body belongs, then inputs the representative speed of each speed range to the frequency shift amount calculation unit 38.

When the n number of representative speeds are input, the frequency shift amount calculation unit 38 uses Equation (1) to calculate the amounts of frequency shift $f_{d1}$ to $f_{dn}$ according to each speed of movement, and inputs the results to the respective frequency conversion/shifting unit $33_1$ to $33_n$. The frequency conversion/shifting unit $33_1$ converts the baseband signal resulting from modulation to a radio signal having a frequency $f_0 - f_{d1}$ and outputs the result, the frequency conversion/shifting unit $33_2$ converts the baseband signal resulting from modulation to a radio signal having a frequency $f_0 - f_{d2}$ and outputs the result, and similarly after that, the frequency conversion/shifting unit $33_n$ converts the baseband signal resulting from modulation to a radio signal having a frequency $f_0 - f_{dn}$ and outputs the result. The combination unit 41 combines each of the radio signals that are output from the frequency conversion/shifting units $33_1$ to $33_n$ and inputs the result to the RF transmission unit 34, and the RF transmission unit 34 transmits the combined RF signal.

With the embodiment of FIG. 10, the relative speed that also takes into consideration the direction of movement is adjusted as a speed group, and when there is a moving body moving at a speed within the speed of the speed group range, the amount of Doppler shift is calculated using a representative speed for compensation, and by doing so, it is possible to perform compensation together for all of the users having a close relative speed.

(D) Embodiment 3

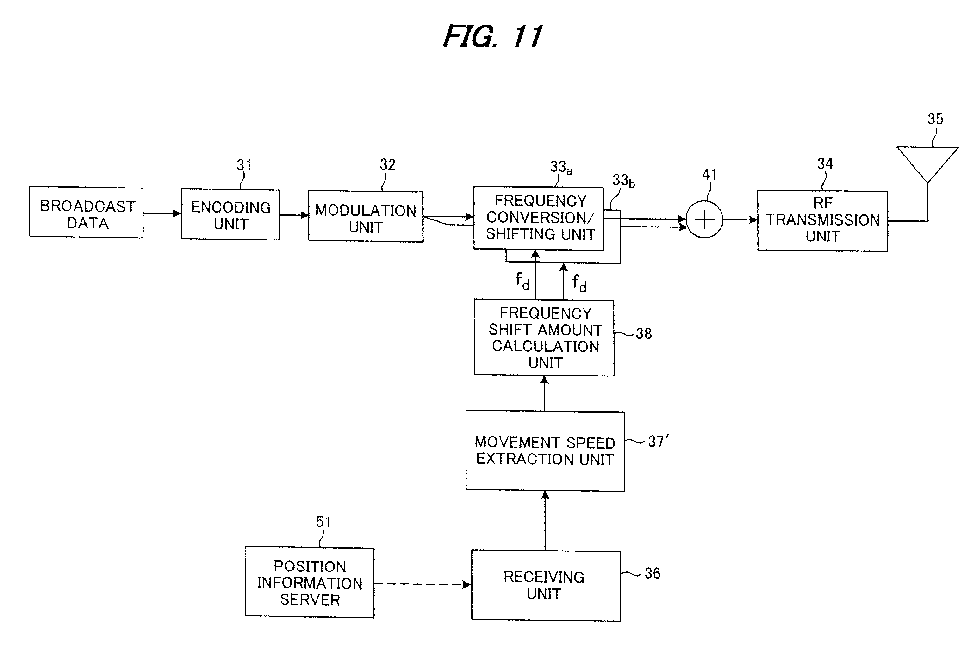

FIG. 11 is a diagram of the construction of a transmission device in a base station of a third embodiment, where the same reference numbers are given to parts that are the same as those of the first embodiment in FIG. 6. This embodiment differs in that two frequency conversion/shifting units 33a, 33b and a combination unit 41 are provided.

As explained using FIG. 3, when the length of a moving body such as a train extends to 100 m, the train car that is at the front of the moving body, which is a train, is moving away from the base station, and a train car that is at the rear of the train is moving toward the base station, so at a certain position in a train car directly below the base station, the amount of Doppler shift suddenly changes from positive '+' to negative '-'. Therefore, in this third embodiment, the frequency conversion/shifting units 33a, 33b shift the frequencies of the radio signals by just the amount of the Doppler shift $f_d$ in the plus direction and minus direction according to the movement speed of the high-speed moving body, and simultaneously transmits a MBMS radio signal having the shifted frequencies $f_0 - f_d$ and $f_0 + f_d$. By doing so, even when the moving body is long, it is possible for the moving terminals in the moving body to receive the MBMS radio signal with good reception from the original desired radio frequency $f_0$ regardless of the train car in which the user is riding.

The position information server 51 transmits information to the base station of whether there is a moving body that is moving in the cell at a speed higher than a reference speed (for example, a train), and when there is such a moving body, transmits information of the movement speed of that moving body and whether that moving body is moving toward or away from the base station.

A movement speed extraction unit 37' extracts the movement speed of the high-speed moving body from information received from the position information server 51 via a receiving unit 36 and inputs the speed into a frequency shift amount calculation unit 38. The frequency shift amount calculation unit uses Equation (1) to calculate the amount of Doppler shift $f_d$ according to the movement speed of the moving body, and inputs that amount to the frequency conversion/shifting units 33a, 33b. The frequency conversion/shifting unit 33a converts the baseband signal resulting from modulation to a radio signal having frequency $f_0 - f_d$ and outputs the result, and the frequency conversion/shifting unit 33b converts the baseband signal resulting from modulation to a radio signal having the frequency $f_0 + f_d$ and outputs the result, the combination unit 41 combines the radio signals that were output from the frequency conversion shifting units 33a, 33b and inputs the result to the RF transmission unit 34, and the RF transmission unit 34 transmits the combined RF signal. As a result, even when the moving body is long such as a train, all of the moving terminals in the moving body can receive the MBMS radio signal from the original desired radio frequency of $f_0$ with good reception.

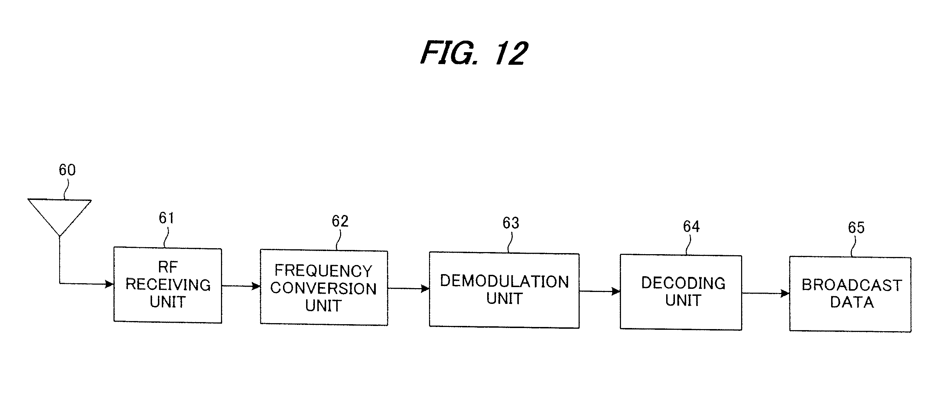

FIG. 12 is a diagram of the construction of a receiving device in a moving terminal that corresponds to the first to third embodiments. An RF receiving unit 61 extracts a radio signal having frequency $f_0$ from the signal received from an antenna 60, a frequency conversion unit 62 performs down conversion of the radio signal having frequency $f_0$ to a baseband signal, a demodulation unit 63 performs demodulation of the baseband signal, and a decoding unit performs error detection/decoding of the demodulated data, then decodes and outputs the broadcast data 65.

(E) Embodiment 4

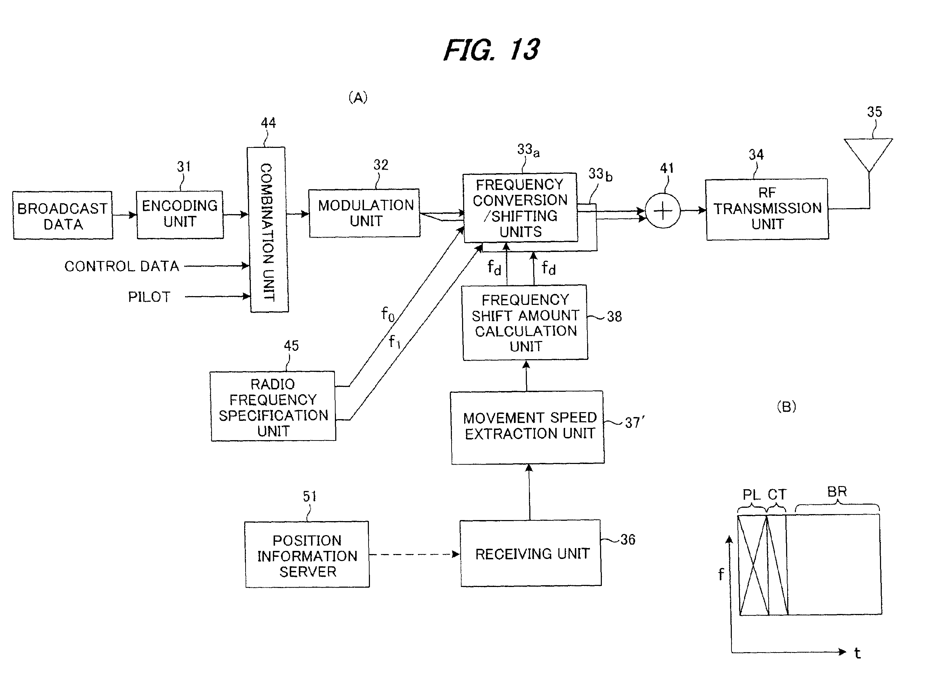

FIG. 13(A) is a diagram of the construction of a transmission device of a fourth embodiment, where the same reference numbers are given to parts that are the same as those of the transmission device of the third embodiment. This embodiment differs in that a combination unit 44 and radio frequency specification unit 45 are provided.

In the third embodiment, when a high-speed moving body is detected, a broadcast service MBMS radio signal is transmitted using radio signals having the two frequencies $f_0 - f_d$ and $f_0 + f_d$, however, in this fourth embodiment, when the transmission device detects a high-speed moving body, a MBMS radio signal is transmitted using radio signals having the two frequencies $f_0 - f_d$ and $f_1 + f_d$. By doing so, it is possible to obtain the effect explained in the summary of the fourth embodiment (see FIG. 4).

As illustrated in (B) of FIG. 13, in the case of OFDM transmission, the frame is time multiplexed in the time axis direction in the order pilot P, control channel CT and broadcast data channel BR, and each pilot, control channel and broadcast data channel are frequency multiplexed in the frequency axis direction. The pilot PL is used for channel estimation and measuring the reception quality, and the control channel CT is used for notifying the moving terminal of the two radio frequencies $f_0$ and $f_1$ in addition to various control data such as the modulation method and encoding rate.

The combination unit 44 time multiplexes the pilot, control data and broadcast data in order and inputs the result to a modulation unit 32, the modulation unit performs OFDM modulation, for example, on the inputted data, and inputs the modulation result to the frequency conversion/shifting units 33a, 33b. Moreover, a radio frequency specification unit 45 inputs radio frequencies $f_0$ and $f_1$ to the frequency conversion/shifting unit 33a, 33b, respectively.

At the same time as the processing described above, a position information server 51 transmits information to the base station indicating whether there is a moving body in the cell that is travelling at a higher speed than a reference speed (for example a train), and when there is such a moving body, transmits information that indicates the movement speed and whether that moving body is moving toward or away from the base station.

A movement speed extraction unit 37' extracts the movement speed of the high-speed moving body from the information that is received from the position information server 51 via a receiving unit 36, and inputs that speed to a frequency shift amount calculation unit 38. The frequency shift amount calculation unit 38 uses Equation (1) to calculate the amount of Doppler shift $f_d$ according to the movement speed of the moving body, and inputs the result to the frequency conversion/shifting units 33a, 33b.

The frequency conversion/shifting unit 33a converts the baseband signal resulting from modulation to a radio signal having frequency $f_0 - f_d$, and outputs the result, the frequency conversion/shifting unit 33b converts the baseband signal resulting from modulation to a radio signal having frequency $f_1 + f_d$ and outputs the result, the combination unit 41 combines the radio signals that were output from the frequency conversion/shifting units 33a, 33b and inputs the result to an RF transmission unit 34, and the RF transmission unit 34 transmits the combined RF signal. A moving terminal that is moving toward the base station is able to receive the MBMS radio signal from the radio signal having frequency $f_0 - f_d$ with good reception, and a moving terminal that is moving away from the base station is able to receive the MBMS radio signal from the radio signal having frequency $f_1 + f_d$ with good reception.

As a result, even when the moving body is long such as a train, all of the moving terminals in the moving body can receive the MBMS radio signal with good reception from either the radio frequency $f_0$ or $f_1$.

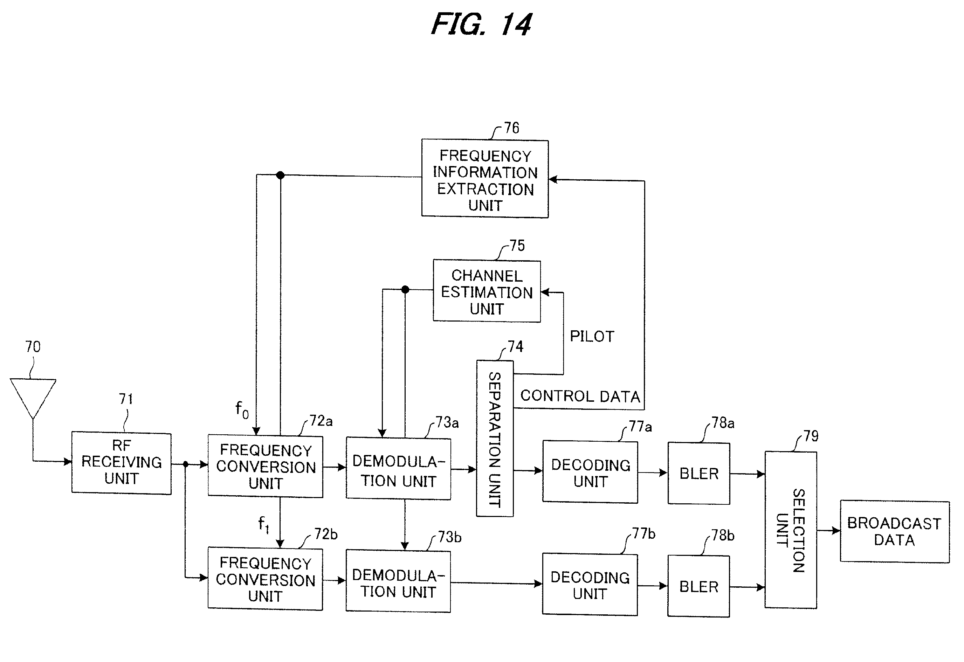

FIG. 14 is a diagram of the construction of a receiving device of a moving terminal that receives and outputs broadcast data that is transmitted from the transmission device of FIG. 13. The case is explained in which of the two radio frequencies $f_0$ and $f_1$, the radio frequency $f_0$ that is used when the moving body is moving at high speed toward the base station is known. For example, when setting a communication link with the base station, the base station notifies the moving terminal of the radio frequency $f_0$.

An RF receiving unit 71 extracts the radio signal having frequency $f_0$ from the signal that is received from an antenna 70, a frequency conversion unit 72a performs down conversion of the radio signal having frequency $f_0$ to a baseband signal, a demodulation unit 73a performs demodulation of the baseband signal, and a separation unit 74 separates the pilot, control data and broadcast data. A channel estimation unit 75 performs channel estimation using the pilot, and inputs the estimation result to demodulation units 73a, 73b to perform channel compensation. In addition, a frequency information extraction unit 76 extracts the radio frequencies $f_0$ and $f_1$, and inputs them to the frequency conversion units 72a, 72b.

After that, the frequency conversion unit 72a performs down conversion of the radio signal having frequency $f_0$ that is included in the signal received from the antenna to a baseband signal, and the demodulation unit 73a performs demodulation of the baseband signal, a decoding unit 77a performs error detection/decoding of the demodulated data, and a block error rate detection unit (BLER unit) 78a calculates the error occurrence rate (error rate) per block of the inputted decoded results, and inputs that error occurrence rate and the decoded result to a selection unit 79.

Similarly, a frequency conversion unit 72b performs down conversion of the radio signal having frequency $f_1$ included in the signal received from the antenna to a baseband signal, a demodulation unit 73b performs demodulation of the baseband signal, a decoding unit 77b performs error detection/decoding of the demodulated data, and a block error rate detection unit (BLER unit) 78b calculates the error occurrence rate per block of the inputted decoded result, then inputs that error occurrence rate and decoded result to the selection unit 79. The selection unit 79 compares the error occurrence rates that were input from the BLER units 78a, 78b, and selects and outputs the decoded result having the smallest error as the broadcast data.

By adding the frequency conversion unit 39 in FIG. 7 to this fourth embodiment, construction is possible that can constantly provide a broadcast service MBMS to moving terminals that are moving at a speed equal to or less than the reference speed.

(F) Processing by the Position Information Server

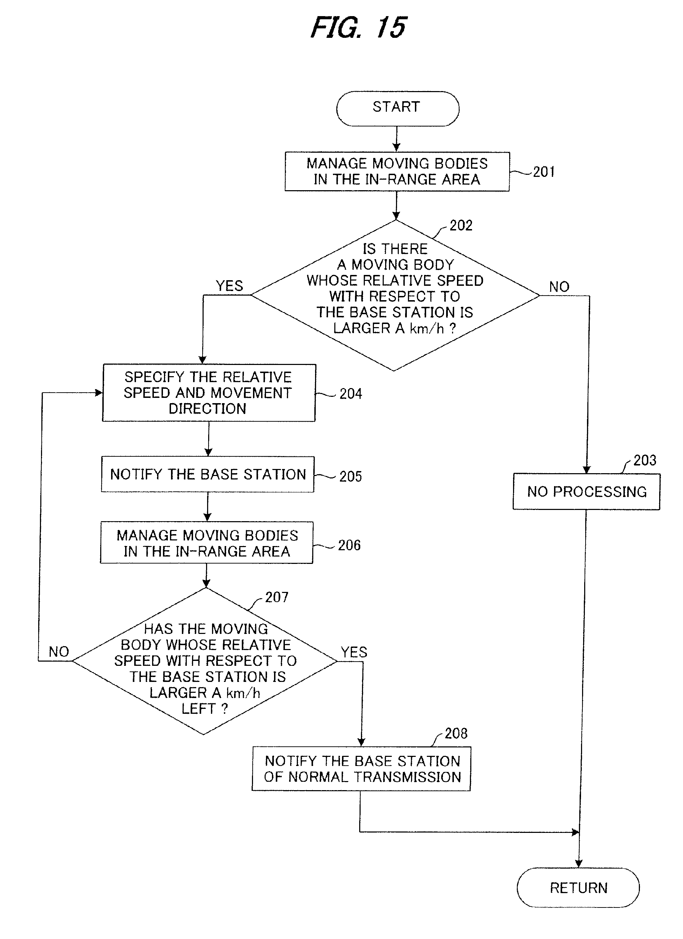

FIG. 15 is a flowchart of the processing by the position information server 51, and when applied to the first embodiment, the process is performed as described below.

The position information server 51 manages the position and movement speed of a moving body that exists in the cell of a specified base station (step 201), determines whether the relative speed (movement speed) of the moving body with respect to the base station is greater than a reference speed A (km/h) (step 202), and when there is no high-speed moving body moving at a higher speed than A (km/h), does not perform any processing (step 203) and repeats the process from step 201.

On the other hand, in step 202, when there is a high-speed moving body that is moving at a higher speed than A (km/h), the position information server 51 identifies the movement speed and movement direction of that moving body with respect to the base station (moving toward/moving away from the base station), and notifies the base station (steps 204, 205). After that, the position information server 51 continues managing the position and movement speed of the moving bodies that exist in the cell of a specified base station (step 206), monitors whether the moving body that was moving at a speed higher than the reference speed A (km/h) no longer exists in the cell (step 207), and when the moving body exists as before, repeats the processing from step 204. On the other hand, in step 207, when there is no longer a moving body that is moving at a speed higher than the reference speed A (km/h), the position information server 51 notifies the base station of that (step 208) and returns to the start of the process.

The process of the flowchart of FIG. 15 is performed as follows when applied to the second embodiment.

The position information server 51 manages the position and movement speed of moving bodies that exist in the cell of a specified base station (step 201), determines whether the relative speeds (movement speeds) of the moving bodies with respect to the base station are greater than a reference speed A (km/h) (step 202), and when there is no high-speed moving bodies moving at a higher speed than A (km/h) does not perform any processing (step 203) and repeats the process from step 201.

On the other hand, in step 203, when there is one or more high-speed moving body that is moving at a higher speed than A (km/h), the position information server 51 identifies the movement speeds and movement directions of the moving bodies with respect to the base station (moving toward/moving away from the base station), and notifies the base station (steps 204, 205). After that, the position information server 51 continues managing the positions and movement speeds of the moving bodies that exist in the cell of a specified base station (step 206), monitors whether the moving bodies that were moving at a speed higher than the reference speed A (km/h) no longer exist in the cell (step 207), and when the moving bodies exist as before, repeats the processing from step 204. On the other hand, in step 207, when there are no longer any moving bodies that are moving at a speed higher than the reference speed A (km/h), the position information server 51 notifies the base station of that (step 208) and returns to the start of the process.

• Advantages of the Invention

With the embodiments of the invention, it is possible for moving terminals in a high-speed moving body in which a plurality of users are riding to properly receive MBMS broadcast service data from a base station, and it is possible for a base station to more efficiently transmit data.

With the embodiments of the invention, it is possible for a moving terminal to properly receive a signal from a base station even when Doppler shifting occurs.

With the embodiments of the invention, it is possible to eliminate the need for control to set whether to transmit a radio signal having a frequency that is increased or decreased from the original transmission frequency in order to compensate for the Doppler effect.

With the embodiments of the invention, when Doppler shifting occurs, it is possible for a moving terminal to properly receive a signal from a base station without having to provide the moving body with a GPS receiver.

**Claims**

1. A broadcast service signal transmitting method for a transmission device that transmits a broadcast service signal using a radio signal, comprising steps of:

   determining whether there is a moving body that is moving at a speed higher than a specified speed toward or away from the transmission device;
   calculating an amount of Doppler shift of a radio frequency based on the movement speed of the moving body when there is such a moving body; and
   shifting a frequency of the radio signal for transmitting the broadcast service signal by the Doppler shift amount in the opposite direction of Doppler shift direction.

2. A broadcast service signal transmitting method for a transmission device that transmits a broadcast service signal using a radio signal, comprising steps of:

   determining whether there is a moving body that is moving at a speed higher than a specified speed toward or away from the transmission device;

calculating an amount of Doppler shift of a radio frequency based on the movement speed of the moving body when there is such a moving body;

shifting a frequency of the radio signal for transmitting the broadcast service signal by the Doppler shift amount in both the plus direction minus direction; and

transmitting the broadcast service signal using each of the shifted radio signals.

3. The broadcast service signal transmission method according to claim 1 or claim 2, comprising a step of receiving information of whether there is a moving body that is moving at the speed higher than the specified speed toward the transmission device or away from the transmission device, and the movement speed of the moving body from an external moving body position management server that manages the position and speed of the moving body that exists in an area in which communication is possible with the transmission device.

4. The broadcast signal transmission method according to claim 1 or claim 2 comprising steps of:

calculating the amount of Doppler shift based on the movement speed of each moving body when there are moving bodies that are moving at speeds higher than the specified speed toward or away from the transmission device;

shifting the frequency of the radio signal by each Doppler shift amount; and

transmitting the broadcast service signal by each shifted radio signal.

5. The broadcast service signal transmitting method according to claim 4 comprising steps of:

dividing the movement speed into a plurality of speed ranges, and setting a representative speed for each speed range;

shifting the frequency of the radio signal by the Doppler shift amount that corresponds to the representative speed of the speed range to which the speed of the moving body belongs; and

transmitting the broadcast service signal using the shifted radio signal.

6. The broadcast service signal transmission method according to claim 2 comprising steps of shifting a first frequency $f_0$ for transmitting the broadcast service signal by the Doppler shift amount in the minus direction, and shifting a second frequency $f_1$ by the Doppler shift amount in the plus direction;

and transmitting the broadcast service signal using the each of the shifted radio signals.

7. The broadcast service signal transmission method according to claims 6 comprising a step of transmitting notification information from the transmission device of the frequency of the first and second radio signal to a receiving device of the moving body.

8. The broadcast service signal transmission method according to claim 7 comprising a step of the receiving device synchronously receiving a radio signal from the transmission device using the first and second radio frequencies that were notified by the notification information.

9. A transmission device that transmits a broadcast service signal using a radio signal, comprising:

a judgment unit that determines whether there is a moving body that is moving at a speed higher than a specified speed toward or away from the transmission device;

a Doppler shift amount calculation unit that calculates an amount of Doppler shift of a radio frequency based on the movement speed of the moving body when there is such a moving body;

a radio frequency shifting unit that shifts a frequency of the radio signal for transmitting the broadcast service signal by the Doppler shift amount in the opposite direction of Doppler shift direction; and

a transmission unit that transmits the broadcast service signal by the shifted radio signal.

10. A transmission device that transmits a broadcast service signal using a radio signal, comprising:

a judgment unit that determines whether there is a moving body that is moving at a speed higher than a specified speed toward or away from the transmission device;

a Doppler shift amount calculation unit that calculates an amount of Doppler shift of a radio frequency based on the movement speed of the moving body when there is such a moving body;

a frequency shifting unit that shifts a frequency of the radio signal for transmitting the broadcast service signal by the Doppler shift amount in both the plus direction or minus direction; and

a transmission unit that transmits the broadcast service signal by each shifted radio signal.

11. The transmission device according to claim 9 or claim 10 further comprising:

a receiving unit that receives information of whether there is a moving body that is moving at the speed higher than the specified speed toward the transmission device or away from the transmission device, and the movement speed of the moving body from an external moving body position management server that manages the position and speed of the moving body that exists in an area in which communication is possible with the transmission device.

12. The transmission device according to claim 9 or claim 10 wherein
the Doppler shift amount calculation unit calculates the amount of Doppler shift based on the movement speed of each moving body when there are a plurality of moving bodies moving at speeds higher than the specified speed toward or away from the transmission device;
the radio frequency shifting unit shifts the frequency of the radio signal by each Doppler shift amount; and
the transmission unit transmits the broadcast service signal using each of the shifted radio signals.

13. The transmission device according to claim 12, wherein
by dividing the movement speed into a plurality of speed ranges and setting a representative speed for each speed range,
the radio frequency shifting unit shifts the frequency of the radio signal by a Doppler shift amount that corresponds with the representative speed of the speed range to which the speed of the moving body belongs; and
the transmission unit transmits the broadcast service signal using the shifted radio signal.

14. The transmission device according to claim 10, wherein
the radio frequency shifting unit shifts the frequency $f_0$ of a first radio signal for transmitting the broadcast service signal by the Doppler shift amount in the minus direction, and shifts the frequency $f_1$ of a second radio signal by the Doppler shift amount in the plus direction; and
the transmission unit transmits the broadcast service signal using each of the shifted radio signals.

15. The transmission device according to claim 14, wherein
the transmission unit transmits the frequencies of the first and second radio signals to a receiving device of the moving body as notification information.

16. A receiving device that receives a broadcast service signal from a transmission device by a radio signal, comprising:

a demodulation device that extracts and demodulates each of radio signals having a plurality of frequencies from a received signal;
a decoding unit that performs decoding of each of the demodulated signals;
an error rate detection unit that calculates an error rate of each of the decoded results; and
a selection unit that selects a decoded result to be output based on the error rate.

## FIG. 1

(A)

$f_0 - f_d$

MBMS (1)

MBMS

11

12

CURRENT BS

350km/h

13

(B)

SP

(1)

SP1

Freq

$f_0 - f_d$

$f_0$

(C)

$f_0$

MBMS

MBMS (2)

11

12

CURRENT BS

350km/h

13

(D)

SP2

(2)

SP

Freq

$f_0$

$f_0 + f_d$

# FIG. 2

(A)

$f_0 - f_d$
$f_0 - f_p$

MBMS

MBMS

$12_1$ (1)

(2)

$12_2$ 350km/h    CURRENT BS

11

13

200km/h

(B)

SP

(1)

SP1

SP'

(2)

Freq

$f_0 - f_d$   $f_0 - f_p$   $f_0, f_0$

SP2

# FIG. 3

(A)

$f_0 - f_d$
$f_0 + f_d$

MBMS

MBMS

(1)

11 (2)

13

CURRENT BS

350km/h

14

(B)

SP

(1)   (2)

SP'

SP1

SP2

Freq

$f_0 - f_p$   $f_0$  $f_0$   $f_0 + f_d$

# FIG. 4

(A)

$f_0 - f_d$
$f_1 + f_d$

MBMS          MBMS

(1)   ~11  (2)

CURRENT BS

350km/h

13     14

(B)

SP      (1)     SP1    (2)   SP2    SP'

Freq

$f_0 - f_d$   $f_0$        $f_1$   $f_1 + f_d$

# FIG. 5

21

$f_0 - f_d$
$f_1 + f_d$

MBMS          MBMS

(1)   ~11  (2)

CURRENT BS

350km/h

13     14

*FIG. 6*

# FIG. 7

EP 2 251 992 A1

## FIG. 8

```
                    ┌──────────┐
                    │  START   │
                    └────┬─────┘
                         │
                         │              ╱101
                    ◇─────────────◇
                    ╱  IS THERE    ╲
        YES  ╱      NOTIFICATION OF       ╲  NO
     ◄───────   A HIGH-SPEED MOVING BODY   ───────►
             ╲   FROM THE POSITION        ╱
              ╲     INFORMATION          ╱
               ╲      SERVER ?          ╱
                 ◇─────────────────◇
```

RECEIVE THE MOVEMENT
DIRECTION AND
MOVEMENT SPEED OF          ~103
THE HIGH-SPEED
MOVING BODY

CALCULATE
THE DOPPLER SHIFT fd        ~104

CORRECT
THE FREQUENCY               ~105

IN ADDITION TO
NORMAL SERVICE,
EXECUTE BROADCAST           ~106
SERVICE FOR A HIGH-
SPEED MOVING BODY

NORMAL BROADCAST            ~102
SERVICE

END

## FIG. 9

BROADCAST DATA → ENCODING UNIT (31) → MODULATION UNIT (32) → FREQUENCY CONVERSION/ SHIFTING UNIT ($33_1$, $33_2$) → (+) (41) → RF TRANSMISSION UNIT (34) → antenna (35)

FREQUENCY SHIFT AMOUNT CALCULATION UNIT (38) → $f_d$, $f_p$ → FREQUENCY CONVERSION/ SHIFTING UNIT

MOVEMENT DIRECTION/ MOVEMENT SPEED EXTRACTION UNIT (37) → FREQUENCY SHIFT AMOUNT CALCULATION UNIT

POSITION INFORMATION SERVER (51) ⇢ RECEIVING UNIT (36) → MOVEMENT DIRECTION/ MOVEMENT SPEED EXTRACTION UNIT

EP 2 251 992 A1

# FIG. 10

EP 2 251 992 A1

| RELATIVE SPEED v | SPEED FOR COMPENSATION |
|---|---|
| 2A< v | 2A |
| A< v < 2A | A |
| −2A< v < −A | −A |
| v < −2A | −2A |

FIG. 11

EP 2 251 992 A1

# FIG. 12

| RF RECEIVING UNIT | FREQUENCY CONVERSION UNIT | DEMODULATION UNIT | DECODING UNIT | BROADCAST DATA |

## FIG. 13

(A)

(B)

EP 2 251 992 A1

FIG. 14

EP 2 251 992 A1

# FIG. 15

START

MANAGE MOVING BODIES
IN THE IN-RANGE AREA ⌐201

⌐202
IS THERE
A MOVING BODY
WHOSE RELATIVE SPEED
WITH RESPECT TO
THE BASE STATION IS
LARGER A km/h ?

YES

NO

SPECIFY THE RELATIVE
SPEED AND MOVEMENT
DIRECTION ⌐204

NOTIFY THE BASE STATION ⌐205

MANAGE MOVING BODIES
IN THE IN-RANGE AREA ⌐206

⌐207
HAS THE MOVING
BODY WHOSE RELATIVE
SPEED WITH RESPECT TO
THE BASE STATION IS
LARGER A km/h
LEFT ?

NO

YES

⌐203
NO PROCESSING

⌐208
NOTIFY THE BASE STATION
OF NORMAL TRANSMISSION

RETURN

# FIG. 16

EP 2 251 992 A1

## INTERNATIONAL SEARCH REPORT

| | International application No. |
|---|---|
| | PCT/JP2008/053762 |

A. CLASSIFICATION OF SUBJECT MATTER
*H04B7/26(2006.01)i*

According to International Patent Classification (IPC) or to both national classification and IPC

B. FIELDS SEARCHED

Minimum documentation searched (classification system followed by classification symbols)
H04B7/24-7/26, H04Q7/00-7/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-117110 A (NTT Docomo Inc.),<br>28 April, 2005 (28.04.05),<br>Par. Nos. [0021] to [0023]<br>& US 2005/0076271 A1 & EP 1521382 A2 | 16<br>8<br>1-15 |
| Y<br>A | JP 2007-194754 A (NEC Corp.),<br>02 August, 2007 (02.08.07),<br>Par. Nos. [0033], [0037]; Figs. 3, 4<br>(Family: none) | 1-15<br>16 |
| Y<br>A | JP 2001-024576 A (Sumitomo Electric<br>Industries, Ltd.),<br>26 January, 2001 (26.01.01),<br>Par. Nos. [0028] to [0032]<br>& US 6397067 B1 & EP 1119115 A1<br>& WO 2001/005065 A1 | 1-15<br>16 |

| ☒ Further documents are listed in the continuation of Box C. | ☐ See patent family annex. |
|---|---|

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 March, 2008 (21.03.08) | Date of mailing of the international search report<br>01 April, 2008 (01.04.08) |
|---|---|
| Name and mailing address of the ISA/<br>Japanese Patent Office | Authorized officer |
| Facsimile No. | Telephone No. |

Form PCT/ISA/210 (second sheet) (April 2007)

28

**INTERNATIONAL SEARCH REPORT**

| International application No. |
|---|
| PCT/JP2008/053762 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2006-345427 A (Matsushita Electric Industrial Co., Ltd.), 21 December, 2006 (21.12.06), Par. Nos. [0020], [0022] (Family: none) | 1-15<br>16 |
| Y<br>A | JP 2001-517913 A (Nokia Networks Oy.), 09 October, 2001 (09.10.01), Par. No. [0012] & WO 1999/016276 A2 | 1-15<br>16 |
| A | JP 2007-081952 A (Fujitsu Ltd.), 29 March, 2007 (29.03.07), Full text & US 2007/0058683 A1 & EP 1764968 A2 | 1-16 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003309517 A